# EUROPEAN PATENT APPLICATION

(11) **EP 2 830 274 A1**
(43) Date of publication of application: **28.01.2015**
(21) Application number: 13177637.9
(22) Date of filing: 23.07.2013
(51) Int. Cl.: H04L 29/06

(54) **Method for electronic transmission of a message and proxy device therefore**

(71) Applicant: Knightsbridge Portable Communications SP, George Town, Grand Cayman (KY)
(72) Inventor: Daniels, Lewis, Llantrisant, South Wales CF72 8LP (GB)
(74) Representative: Sonn & Partner Patentanwälte

(57) **Abstract**

A method for electronic transmission of a message (19) for electronic transmission through a proxy device (1; 22, 25; 32, 34) and a proxy device (1; 22, 25; 32, 34) therefore, wherein the proxy device (1; 22, 25; 32, 33, 34) receives the message (19) from a sender device (15), stores the message (19) in a protected memory partition(4; 39, 39'), deletes all traces of the connection between the sender device (15) and the proxy device (1; 22, 25; 32, 33, 34), loads the message (19) from the memory partition (4; 39, 39') and forwards the message (19) to at least one destination (20; 35).

## Description

The invention concerns a proxy device and a method for electronic transmission of a message through the proxy device. In particular, the invention relates to a method for secure and untraceable transmission of a message by means of a dedicated proxy device.

Different types of proxy devices for securing the communication between two parties have been demonstrated:
the US 2008/0282078 A1 shows an S/MIME gateway for e-mail encryption, which acts as a proxy between a client device and an SMTP server and provides encryption for the messages sent and received;
the EP 2 533 488 A1 describes an external NFC-enabled device for signing and encrypting e-mails, such that the respective keys need not be present of the computational platform used to access and transmit the messages; and
the EP2575298A1 describes a transparent proxy device, which analyses the entire data stream of a client, searches for specific user data (such as e-mails) and encrypts this data before passing it on to a similar device arranged at the other end of the transmission, which picks up the data stream, recognizes the encrypted e-mail and transparently decrypts it before passing it further on to the receiving client;
none of these devices conceal the identity of the sender of the message. Instead, the receiver may easily recognize the source of the message and respond to the sender.

On the other hand, the WO 03/039182 A1 describes a method for replacing identifying features in an electronic message to allow for anonymous transmission of a message. However, this is basically a diversion technique rather than a security method and the message is only diverted to different receivers, but the transmitted data would be susceptible to a man in the middle attack.

Also, there are other routing-based obfuscation methods that are aimed at concealing the identity of the connected parties to a third party, however the two parties themselves are in general well aware of each others identity. In particular, the receiving party usually, and intentionally so, possesses sufficient information to identify the sender.

It is therefore object of the present invention, to provide a method for electronic transmission of a message through a proxy device, and a corresponding proxy device, wherein the message can not be traced back beyond the proxy device, in particular, wherein the identity of the original sender of the message may not be discovered by tracing back the message and accessing the discovered origin.

The above-mentioned problem is solved, according to the present invention, by a method as defined at the outset, wherein the proxy device receives the message from a sender device, stores the message in a protected memory partition, deletes all traces of the connection between the sender device and the proxy device, loads the message from the memory partition and forwards the message to at least one destination. The removal of all traces of the connection between the sender device and the proxy device implies that the respective connection must first be closed and then all caches, logs or settings modified in relation to the connection are deleted or undone.

Correspondingly, according to the present invention, the proxy device as defined at the outset, which solves the above-mentioned problem, comprises a secure processor, a first data connection, a memory, configured to hold a protected partition, and a second data connection, wherein the proxy device is configured to receive the message via the first data connection, store the message in the protected partition, delete all traces of the first data connection, load the message from the protected partition and forward the message via the second data connection. Access to the protected partition is controlled at the hardware level by the secure processor, i.e. the secure processor may be configured to encrypt data written to the protected partition with a key accessible only by the secure processor. At the moment the second data connection is opened, the proxy device is the end-point of the traceable communication path and any tracing attempts, because the first data connection is closed and the proxy device has lost all indications to the device which had been connected when the message was received. Preferably, the proxy device performs a full wipe of itself, with the exception of the memory partition holding the message, after storing the message in the memory partition. In general, all data on the proxy device, except for the message just received, is removed. As opposed to deleting only those traces, which are known to exist or anticipated after the first connection, this method avoids the possibility of secondary or forged traces that could otherwise circumvent the purge or wipe of the proxy device. The approach of deleting everything except the message is also much simpler to implement and verify, because the proxy device is effectively reset to a known initial state.

To the same end and with the same advantages, the secure processor of the proxy device can be configured to perform a full data wipe of the proxy device, except for the protected partition holding the message. When the secure processor is used to remove any data stored on the device and reset all memories and caches and spares only the content of the protected partition, the data able to outlast the wipe must go through the secure processor beforehand and can be filtered there.

In an advantageous mode of the present method, the proxy device strips any information pertaining to the sender and/or date and time of sending from the message before storing the stripped message in the memory partition. In this way, any traces contained in the message itself, either unintentionally or through misuse, can be removed from the message automatically to ensure that the sender can not be identified or reconstructed when the message is forwarded to its destination.

In a similar manner, the secure processor may advantageously be configured to strip any information pertaining to the sender and/or date and time of sending from the message. Hence the secure processor should be able to read and analyse the message. As for the case of sending an e-mail message, the secure processor may be configured to strip those header fields of e-mails, which concern the sender of the message.

To avoid or at least significantly complicate interception, the inventive method may further include a step during which the proxy device at least partially encrypts the message before forwarding it to the at least one destination. Encrypting the message helps to prevent content analysis of the message and match the message content with other intercepted messages to deduce the probable sender.

Accordingly, the secure processor of the proxy device comprises a key and is configured to encrypt the message with said key. The key may be stored in a key storage and match a corresponding decryption key of the receiver. In particular it may be a public key of the receiver.

To improve the security of the transmission, in particular if an encryption key of the receiver is not known, the proxy device may split the message at least into a first part and a second part and forward the first part independently from the second part. One of the parts may include or constitute a temporarily generated transmission key. The split is done in a way as to render reconstruction of the message from only one part impossible. In particular this can be achieved by first encrypting and then fragmenting the message.

Likewise, the secure processor of the proxy device may preferably be configured to split the message at least into a first part and a second part and to forward the first part independently from the second part.

In this context, interception of both or all parts can be prevented if the proxy device comprises at least two data connections and - according to the present method - forwards the first part over a different data connection than the second part. The probability that a wire-tapper has access to both data connections simultaneously, is significantly lower than for a single data connection.

Correspondingly, it is preferred, if the secure processor is connected to at least two data transmission units and configured to forward each of the first and second part of the message over a different data transmission unit.

To further strengthen the above measures, the present method can be realized such that the proxy device forwards the first part to a different destination than the second part. In this case, if one of the destinations is compromised, it will not be possible to reconstruct the message. Also, it renders interception of the message on the receiving side significantly more difficult, as both destinations must be traced to collect all parts of the message.

Thus, in a preferred embodiment of the present proxy device, the first part of the message is associated to a first destination and the second part of the message is associated to a second destination, different from the first destination.

In cases where anonymity is not priority, the present method and device may be modified such that the proxy device encrypts the message but does not perform a wipe as described above, but splits the encrypted message into at least two parts and sends one part, preferably the larger of the two parts, back to the sending device for direct transmission to a receiving device. The receiving device, which is connected to a corresponding receiving proxy device, forwards the received part to its local proxy device. The other part of the message, preferably the smaller of the two parts, is transmitted from the sending proxy device to the receiving proxy device without going through the sending and receiving devices, such that the receiving proxy device may assemble the two parts, decrypt the complete message and provide the decrypted message to the receiving device. In this instance, the sending and receiving devices, which may for example be mobile personal computing devices, such as smart phones, tablets or laptops, enjoy the benefit of a fast direct connection as well as the security of a separate, more secure, but slower path through the two proxy devices. Naturally, the sending and receiving devices are identifiable to each other due to their direct connection.

The invention will be defined in more detail below by means of preferred exemplary embodiments, to which it is not to be limited to, however, and with reference to the drawings. In detail:
Fig. 1 shows a schematic diagram of the components of a preferred embodiment of the proxy device;
Fig. 2 shows the parties involved in a direct transmission of a message secured by two mobile proxy devices; and
Fig. 3 shows an alternative embodiment with a central proxy device and possible links to mobile proxy devices.

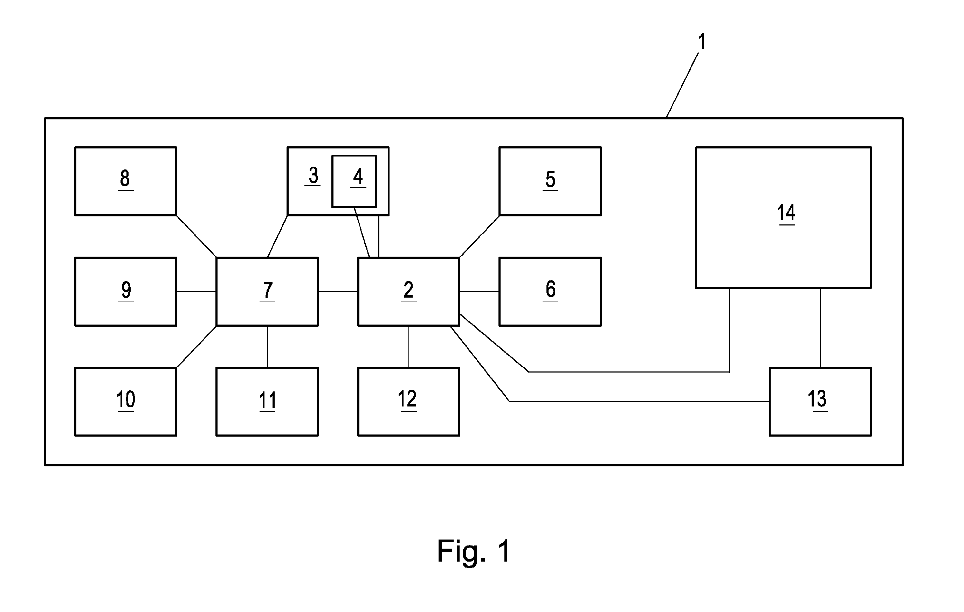

The proxy device 1 displayed in Fig. 1 comprises a secure processor 2 connected to a memory 3. The memory 3 holds a protected partition 4, which consumes parts or all of the capacity of the memory 3. The protected partition 4 is encrypted and may be accessed exclusively by using a key to decrypt the data stored therein. Said key is stored in a dedicated key storage 5 separate from the memory 3. The key storage 5 is connected to the secure processor 2. The secure processor 2 may further be connected to an authentication device, in particular to a finger print module 6. The secure processor 2 can be configured to enable access to the protected partition 4 only upon successful authentication with the finger print module 6. In one embodiment, the key storage 5 is encrypted such that it may be accessed only by providing a pre-defined set of authentication features.

The secure processor 2 is preferably a special-purpose device designed specifically for hardware encryption tasks. For general tasks, in particular for driving communication with external devices, the proxy device 1 comprises a conventional multipurpose processor 7. The processor 7 is connected to a wireless network (WiFi) unit 8, a Bluetooth unit 9, a Near Field Communication (NFC) unit 10 and/or a cellular network client unit 11, which supports 3G and/or 4G data connections via a cellular network. The key storage 5 can not be accessed from the processor 7, but is connected to the processor 7 only via the secure processor 2.

The secure processor 2 is connected to a read-only memory 12, which contains a factory image, i.e. reset information to overwrite the current status and wipe the proxy device. Thus the secure processor 2 is configured to perform a full wipe of the proxy device 1, in particular of any areas of the memory 3 not allocated to the protected partition 4. Furthermore, the secure processor 2 is connected to a tamper detection unit 13. The tamper detection unit 13 monitors the integrity of the proxy device 1 and sends a break-in signal to the secure processor 2 when a breach of integrity is detected. Upon reception of the break-in signal, the secure processor 2 triggers a full wipe of the proxy device 1 and corrupts the key storage 5 to prevent unauthorised access to the protected partition 4. The proxy device 1 comprises a battery 14, which powers all of the above-mentioned units, wherein priority is given to the tamper detection unit 13 and the secure processor 2. In particular, the secure processor 2 is configured to monitor the charge state of the battery 14. If access to the key storage 5 is not restricted by authentication mechanisms, the secure processor 2 may invalidate the key storage 5 before a foreseeable power failure in order to avoid unauthorised access to the key stored therein.

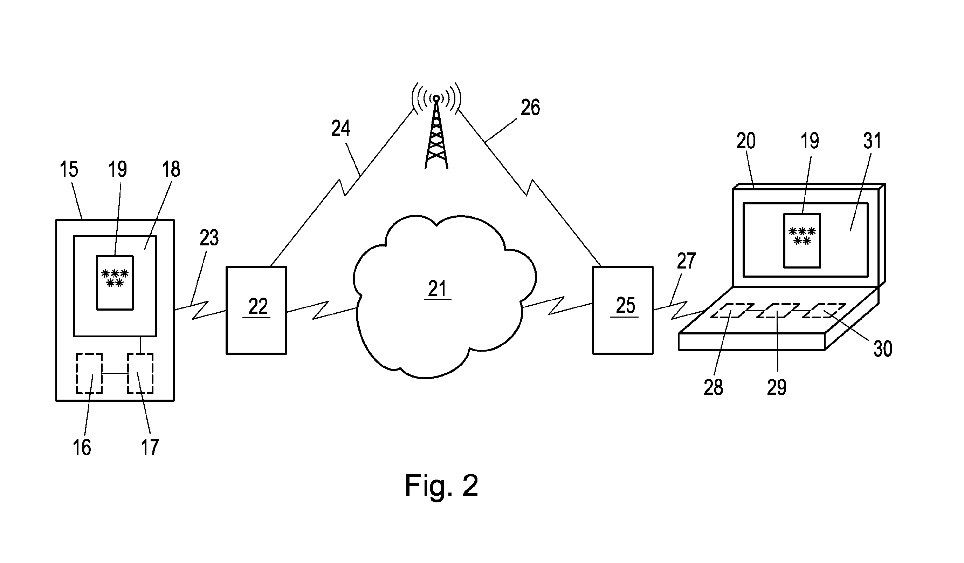

Fig. 2 shows a first mobile computer 15 comprising a memory 16, a processor 17 and a display 18. A user of the mobile computer 15 has entered a secret message 19, which shall be transmitted to a second mobile computer 20. The second computer 20 is remote to the first mobile computer 15 and reachable through a public network 21. In order to securely transmit the message 19, the first mobile computer 15 is connected to the first proxy device 22 according to the proxy device 1 shown in Fig. 1 via a short-range wireless connection 23. The wireless connection 23 may be a NFC, Bluetooth or WiFi connection and preferably uses a shared encryption key to protect data transmitted via the connection 23. As a first step, the secret message 19 is transmitted from the first mobile computer 15 via the connection 23 to the first proxy device 22.

The first proxy device 15 receives the message 19 at one of the data transmission units 8, 9, 10, 11 (cp. Fig. 1) and processes it in the general-purpose processor 7. The general-purpose processor 7 strips any information pertaining to the sender and/or data, time or location of sending from the message and passes the stripped message on to the secure processor 2. If the first proxy device 15 is unlocked by a successful authentication, the secure processor 2 encrypts the stripped message using a key from the key storage 5 and stores it in the protected partition 4 of the memory 3.

After the now stripped and encrypted message is stored in the protected partition 4, the secure processor 2 triggers a full wipe of the proxy device 1, including the memory 3, except for the protected partition 4, as well as all memories and caches inside the transmission units 8, 9, 10, 11 and the general-purpose processor 7. Only after the wipe is complete, the secure processor 2 loads the message from the protected partition 4 by decrypting the message and subsequently encrypts it with a generated, preferably one-time, transmission key. The encrypted message may then be fragmented into two or more part. For example, bits or bytes at predefined positions may be extracted from the message to form a first part of the message, wherein the remaining data forms a second part. Then the secure processor 2 passes the transmission key, if applicable together with the first part of the encrypted message, on to the general-purpose processor 7 for transmission via the public network 21. The body of the encrypted message or at least the second part thereof, which is encrypted with the transmission key, is sent over a separate cellular network connection 24.

On the receiving side, the second mobile computer 20 is connected to the public network 21 via a second proxy device 25. The second proxy device 25 receives the transmission key, if applicable together with the first part of the message, via the public network 21 and the encrypted message or at least the second part of the encrypted message via a separate cellular network connection 26. After reception of the entire encrypted message, i.e. all parts of the encrypted message body and the transmission key, the encrypted message is reassembled and decrypted by the secure processor 2 inside the second proxy device 25, using the transmission key. Thereafter the message 19 is stored in the protected partition 4 and a full wipe of the second proxy device 25 is performed before passing the message 19 from the protected partition 4 via the secure processor 2 to the general-purpose processor 7, which is configured to transmit the message 19 over a local, short-range connection 27 to the second mobile computer 20. Again, the local connection 27 is preferably secured by use of an encrypted protocol or similar provisions. The second mobile device 20 comprises a transmission unit 28 for communication with the second proxy device 25. The transmission unit 28 is connected to a processor 29 of the second mobile device 20, which processor 29 is connected to a memory 30 to store the received message 19. Finally, the second mobile computer 20 also comprises a display 31 controlled by the processor 29 to present the message 19 to a user.

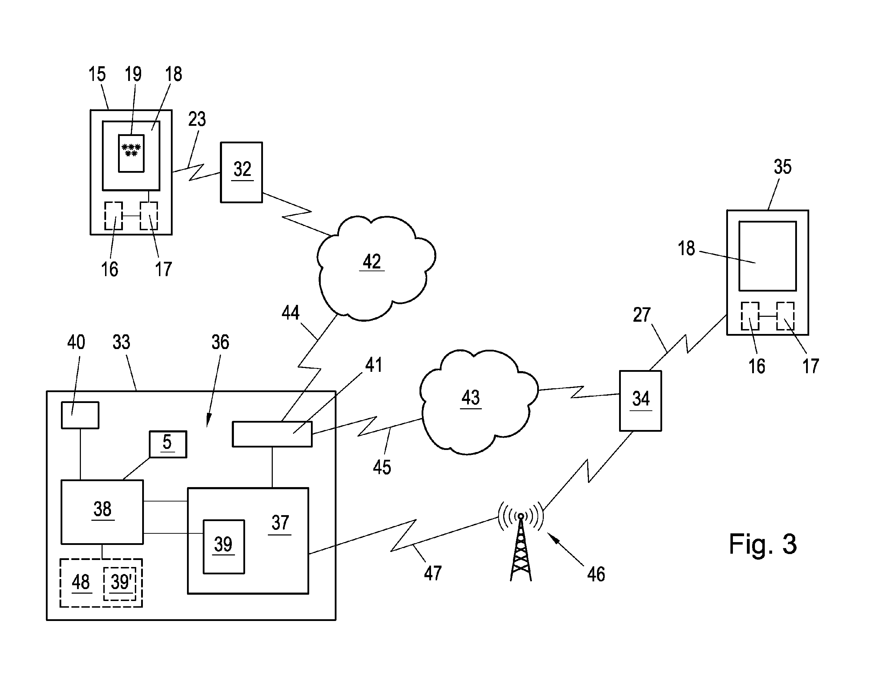

Fig. 3 shows additional use cases of proxy devices 32, 33, 34 according to the invention. In this case, multiple proxy devices 32, 33, 34 are connected in series to transmit a message from a first mobile computer 15 according to Fig. 2 to a third mobile computer 35, similar to the first mobile computer 15. The local connections 23, 27 between the mobile computers 15, 35 and the respective local proxy devices 32, 34 correspond to the local connections 23, 27 described in relation with Fig. 2.

Instead of a conventionally routed message between the first mobile proxy device 32 and the third mobile proxy device 34, i.e. where the two proxy devices 32, 34 communicate directly via a common public network 21 as in Fig. 2, such that a theoretically traceable connection exists between the mobile proxy devices 22, 25, here the proxy devices 32, 34 are each connected to a central proxy device 33. The central proxy device 33 is represented by a server room 36 with at least one server 37 comprising conventional server hardware (not shown), e.g. a rack with storage, computing and memory units, an uninterruptible power supply, cooling etc. The server 37 is connected to a secure processor 38, similar to the secure processor 2 of the mobile proxy devices 32, 34, such that the secure processor 38 has access to a protected partition 39 housed in the server 37, e.g. occupying a part of a memory of the server 37. The protected partition 39 is opaque to the server 37, meaning that no application running on the server 37 has access to the content of the protected partition 39. In particular, the protected partition 39 is encrypted by a key stored in a key storage 40 connected only to the secure processor 38.

The server room 36 is secured by an access control system 40, which comprises sensors to detect any physical access to the server room 36. For example, the access control system 40 may comprise door sensors and movement detection devices or the like. The access control system 40 may be configured to perform authentication and authorization of users entering the server room 36. In case an unauthorised access is detected, the access control system sends a break-in signal to the secure processor 38. The secure processor 38, upon reception of the break-in signal, invalidates, corrupts or deletes the key storage 5, effectively avoiding any further access to the protected partition 39. In addition, the secure processor 38 may instruct the server 37 to perform a full wipe, removing all connection information stored or cached by the server 37. Therefore, regarding the basic functions, the access control system 40 is in principle an equivalent of the tamper detection unit 13 of the proxy device 1 (cp. Fig. 1).

The server 37 is connected to a gateway 41, which is configured to filter any data traffic between the server 37 and the public networks 42, 43. In particular, the gateway 41 may intercept, interpret and potentially block any incoming and outgoing data from or to the public networks 42, 43 and the server 37 respectively. The gateway 41 may be a dedicated device, such as those produced by InZero Systems. The server 37 may further be directly connect to a cellular network 46. Alternatively or additionally, the connection 47 to the cellular network 46 may also go through the gateway 41 and/or the server 37 may be configured to directly connect to one or several public networks 42, 43 without going through the gateway 41, either in one direction or both directions. The gateway 41 serves as an optional additional layer of security to protect the server 37 and ultimately the protected partition 39.

In a further embodiment, the protected partition 39 may also be located on a device 48 physically separate from the server 37, which device 48 is arranged to provide memory capacity accessible from the secure processor 38. In this case the protected partition 39' is allocated on the separate device 48 instead of the server 37.

The proxy devices 32, 33, 34 in Fig. 3 shall be further understood by the following explanation of the steps performed during transmission of a confidential message from the first mobile computer 15 to the third mobile computer 35. The first mobile computer 15 processes the message 19, which has been entered or at least temporarily stored, and transmits the message 19 over the local connection 23 to the first proxy device 32. The first proxy device 32 is configured to transmit the message over the public network 42 to the central proxy device 33. For this purpose it encrypts the message and optionally fragments or splits the encrypted message before transferring it over the public network 42. In a separate step, it transmits a transmission key used to encrypt the message to the central proxy device 33. Alternatively or additionally, if the first proxy device knows a public key of the central proxy device 33, it uses this public key for (additional) encryption. The gateway 41 receives the encrypted message or fragments thereof and passes it, or them respectively, on to the server 37. The server 37 recognizes the encrypted message without being able to access its content and sends it to the secure processor 38. The secure processor 38 waits until the complete encrypted message, if applicable including all parts of the encrypted message, and the corresponding transmission key is received and then reassembles and decrypts the message and stores the message in the protected partition 39. Subsequently, all traces of the connection 44 are removed. Specifically, the secure processor 38 instructs the server 37 and preferably the gateway 41 to perform a full wipe of all memories and caches except for the protected partition 39. If the protected partition 39 is located on a physically separate device 48, as mentioned above, the server 37 and preferably the gateway 41 are instructed to perform a full reset and re-initialisation, e.g. including a local format and reboot.

Then the secure processor 38 loads the message from the protected partition 39, encrypts it using preferably a newly generated transmission key and/or a public key of the receiving party and splits the encrypted message into two or more parts. Then the secure processor 38 passes at least a first part of the message together with the transmission key to the server 37 for further transmission either over the public network 43 or the cellular network 46. The second part is preferably transmitted separately and over a different connection 45, 47. The third proxy device 34 receives the encrypted message as explained before in connection with the second proxy device 25 and provides it to the third mobile computer 35. As the third proxy device 34 receives the message from the central proxy device 33, it has no indication of the original sender, i.e. the first mobile computer 15 or the first proxy device 32.

Of course, the original sender 15, 32 must have some indication of the receiver in order to enable the central proxy device 33 to route the message correctly. Alternatively or additionally, the message may be deposited at the central proxy device 33 in its protected partition 39, 39' and marked with a tag unrelated to its origin or destination, e.g. a random ID. The receiver may then poll the central proxy device 33 providing the tag to initiate transmission to the third proxy device 34. In this scenario, neither the sender nor the receiver have any permanent indication of each other.

In the above exemplary embodiments and exemplary use cases the connections, both via public networks, such as wireless local area networks, wide area networks or the like, and via cellular networks, are interchangeable and/or may be replaced by other types of data connections. Also, all described transmission paths may be reversed, i.e. a message may analogously be transmitted from the party described as receiving party to the party described as sending party without deviating from the principle of the invention.

## Claims

1. A method for electronic transmission of a message (19) through a proxy device (1; 22, 25; 32, 34), wherein the proxy device (1; 22, 25; 32, 33, 34) receives the message (19) from a sender device (15), stores the message (19) in a protected memory partition(4; 39, 39'), deletes all traces of the connection between the sender device (15) and the proxy device (1; 22, 25; 32, 33, 34), loads the message (19) from the memory partition (4; 39, 39') and forwards the message (19) to at least one destination (20; 35).

2. The method according to claim 1, **characterised in that** the proxy device (1; 22, 25; 32, 33, 34) performs a full wipe of itself, with the exception of the memory partition (4; 39, 39') holding the message (19), after storing the message (19) in the memory partition (4; 39, 39').

3. The method according to claim 1 or 2, **characterised in that** the proxy device strips (1; 22, 25; 32, 33, 34) any information pertaining to the sender (15) and/or date and time of sending from the message (19) before storing the stripped message in the memory partition (4; 39, 39').

4. The method according to one of claims 1 to 3, **characterised in that** the proxy device (1; 22, 25; 32, 33, 34) at least partially encrypts the message before forwarding it to the at least one destination (20; 35).

5. The method according to one of claims 1 to 4, **characterised in that** the proxy device (1; 22, 25; 32, 33, 34) splits the message (19) at least into a first part and a second part and forwards the first part independently from the second part.

6. The method according to claim 5, **characterised in that** the proxy device (1; 22, 25; 32, 33, 34) comprises at least two data connections (21, 24, 26; 42, 43, 46, 47) and forwards the first part over a different data connection (21, 24, 26; 42, 43, 46, 47) than the second part.

7. The method according to claim 5 or 6, **characterised in that** the proxy device (1; 22, 25; 32, 33, 34) forwards the first part to a different destination than the second part.

8. A proxy device (1; 22, 25; 32, 33, 34) for electronic transmission of a message (19), with a secure processor (2), a first data connection (23), a memory (3), configured to hold a protected partition (4), and a second data connection (21, 24; 45, 47), wherein the proxy device (1; 22, 25; 32, 33, 34) is configured to receive the message (19) via the first data connection (23), store the message (19) in the protected partition (4), delete all traces of the first data connection (23), load the message (19) from the protected partition (4) and forward the message (19) via the second data connection (21, 24; 45, 47).

9. The proxy device according to claim 8, **characterised in that** the secure processor (2) is configured to perform a full data wipe of the proxy device (1; 22, 25; 32, 33, 34), except for the protected partition (4) holding the message (19).

10. The proxy device according to claim 8 or 9, **characterised in that** the secure processor (1; 22, 25; 32, 33, 34) is configured to strip any information pertaining to the sender and/or date and time of sending from the message (19).

11. The proxy device according to one of claims 8 to 10, **characterised in that** the secure processor (2) comprises a key and is configured to encrypt the message (19) with said key.

12. The proxy device according to one of claims 8 to 11, **characterised in that** the secure processor (2) is configured to split the message (19) at least into a first part and a second part and to forward the first part independently from the second part.

13. The proxy device according to claim 12, **characterised in that** the secure processor (2) is connected to at least two data transmission units (8, 9, 10, 11) and configured to forward each of the first and second part of the message (19) over a different data transmission unit (8, 9, 10, 11).

14. The proxy device according to claim 12 or 13, **characterised in that** the first part of the message (19) is associated to a first destination and the second part of the message is associated to a second destination, different from the first destination.
